# DEMANDE DE BREVET EUROPEEN

(11) **EP 1 655 696 A2**
(43) Date de publication de la demande: **10.05.2006**
(21) Numéro de dépôt: 05109285.6
(22) Date de dépôt: 06.10.2005
(51) Int. Cl.: G06Q 30/00

(54) **Procédé de communication entre un serveur et un terminal mobile**

(30) Priorité: 09.11.2004 FR 0452569
(71) Demandeur: ALCATEL, 75008 Paris (FR)
(72) Inventeur: MATHIEU, Guy, 91400, ORSAY (FR); DAURENSAN, Véronique, 92160, ANTONY (FR)

(57) **Abrégé**

L'invention concerne le domaine des procédés de communication entre un serveur et un terminal mobile, le serveur se chargeant de donner des conseils à l'utilisateur du terminal mobile quant à sa façon de modifier son aspect, ainsi que le domaine des serveurs et des terminaux mobiles adaptés pour mettre en oeuvre lesdits procédés de communication. La modification de l'aspect de l'utilisateur du terminal mobile peut concerner sa coiffure et/ou son habillage et/ou son maquillage. Dans ce procédé, le terminal mobile fournit au serveur au moins deux informations supplémentaires destinées à aider le serveur à analyser l'image, parmi lesquelles le type d'événement auquel va assister l'utilisateur du terminal mobile et une information relative à des données objectives concernant l'utilisateur du terminal mobile.

## Description

L'invention concerne le domaine des procédés de communication entre un serveur et un terminal mobile, le serveur se chargeant de donner des conseils à l'utilisateur du terminal mobile quant à sa façon de modifier son aspect, ainsi que le domaine des serveurs et des terminaux mobiles adaptés pour mettre en oeuvre lesdits procédés de communication. La modification de l'aspect de l'utilisateur du terminal mobile peut notamment concerner sa coiffure et/ou son habillage et/ou son maquillage.

Selon un art antérieur, décrit par exemple dans les documents suivants, tels que demande de brevet internationale WO 2004/036478, abrégés japonais JP 2002159338, JP 2002015056 ou JP 2001273457, il est prévu des procédés de communication entre un serveur et un terminal mobile, concernant surtout la coiffure de l'utilisateur du terminal mobile, dans lesquels le serveur donne un conseil à l'utilisateur du terminal portable sur la coiffure de l'utilisateur ou offre la possibilité à l'utilisateur de faire des simulations avec une coiffure. Un inconvénient de ces procédés est de ne pas être suffisamment adaptés ni d'une part à l'utilisateur ni d'autre part à la situation précise dans laquelle l'utilisateur se trouve lorsqu'il sollicite le conseil du serveur.

L'invention propose un procédé amélioré dans lequel deux informations supplémentaires, une concernant l'utilisateur lui-même et l'autre la situation précise dans laquelle l'utilisateur se trouve, sont communiquées par le terminal mobile au serveur qui les utilise pour donner un conseil plus adapté à l'utilisateur et à sa situation.

Selon l'invention, il est prévu un procédé de communication entre un serveur et un terminal mobile, comprenant : une étape d'envoi du terminal mobile vers le serveur d'au moins une image représentant un modèle d'un aspect d'une personne ; une étape d'analyse, par le serveur, de l'image envoyée ; une étape d'association, à l'image analysée, d'au moins une information relative à un conseil à l'utilisateur du terminal mobile ; une étape d'envoi, vers le terminal mobile, de l'information associée à l'image ou d'au moins une partie des informations associées à l'image ; caractérisé en ce que : le terminal mobile fournit au serveur au moins deux informations supplémentaires destinées à aider le serveur à analyser l'image, parmi lesquelles le type d'événement auquel va assister l'utilisateur du terminal mobile et une information relative à des données objectives concernant l'utilisateur du terminal mobile ; le serveur utilise lesdites informations supplémentaires pour réaliser l'étape d'association ; l'information relative à un conseil à l'utilisateur du terminal mobile comprend un ou plusieurs conseils à l'utilisateur du terminal mobile pour rendre son aspect semblable au modèle.

Selon l'invention, il est aussi prévu un terminal mobile comprenant : un dispositif d'envoi vers un serveur d'au moins une image représentant un modèle d'un aspect d'une personne ; un dispositif de réception, d'une information associée par un serveur à l'image et relative à un conseil à l'utilisateur du terminal mobile ou d'au moins une partie des informations associées par un serveur à l'image et relatives à un conseil à l'utilisateur du terminal mobile, et envoyée par un serveur ; caractérisé en ce que le dispositif d'envoi est adapté pour fournir à un serveur au moins deux informations supplémentaires destinées à aider un serveur à analyser l'image, parmi lesquelles le type d'événement auquel va assister l'utilisateur du terminal mobile et une information relative à des données objectives concernant l'utilisateur du terminal mobile.

Selon l'invention, il est encore prévu un serveur comprenant : un dispositif de réception d'au moins une image représentant un modèle d'un aspect d'une personne et étant envoyée par un terminal mobile ; un dispositif d'analyse de l'image reçue et d'association, à l'image analysée, d'au moins une information relative à un conseil à un utilisateur d'un terminal mobile ; un dispositif d'envoi, vers un terminal mobile, de l'information associée à l'image ou d'au moins une partie des informations associées à l'image ; caractérisé en ce que : le dispositif de réception est adapté pour recevoir d'un terminal mobile au moins deux informations supplémentaires destinées à aider le serveur à analyser l'image, parmi lesquelles un type d'événement auquel un utilisateur d'un terminal mobile est susceptible d'assister et une information relative à des données objectives concernant un utilisateur d'un terminal mobile ; le dispositif d'analyse et d'association est adapté pour utiliser lesdites informations supplémentaires lors de l'étape d'association ; l'information destinée à être envoyée par le dispositif d'envoi du serveur à un terminal mobile, comprend un ou plusieurs conseils à un utilisateur d'un terminal mobile pour rendre son aspect semblable au modèle.

L'invention sera mieux comprise et d'autres particularités et avantages apparaîtront à l'aide de la description ci-après et des dessins joints, donnés à titre d'exemples, où :

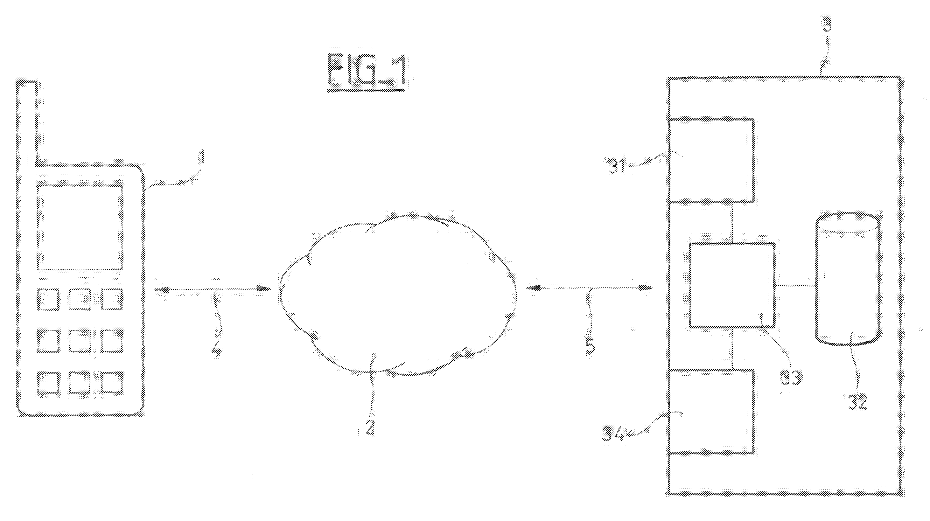

- la figure 1 représente schématiquement un exemple de système incluant un serveur et un terminal mobile et mettant en oeuvre le procédé de communication selon l'invention.

De préférence, un historique des consultations précédentes du serveur par l'utilisateur est stocké, une synthèse de cet historique est réalisée par le serveur, et le serveur utilise cette synthèse pour réaliser l'étape d'association. Ainsi, plus l'utilisateur utilise le service, plus l'historique s'enrichit et plus le serveur est à même de proposer un service efficace et adapté à l'utilisateur, ce qui au bout d'un certain temps en fait un service susceptible de satisfaire parfaitement l'utilisateur. Dans un mode de réalisation préférentiel, la synthèse comprend le type d'événement auquel l'utilisateur assiste le plus fréquemment, le type de modèle le plus fréquemment choisi par l'utilisateur, et la version de l'information relative à des données objectives concernant l'utilisateur du terminal mobile la plus récemment reçue par le serveur de la part du terminal mobile. Ainsi le serveur peut se faire une idée précise du type d'utilisateur aussi bien par rapport à ses caractéristiques objectives par exemple définissant extérieurement son aspect telles que notamment poids, taille, age ou sa position telle que son métier que par rapport à ses caractéristiques subjectives reflétant notamment ses goûts. La tenue d'un historique par le serveur peut aussi permettre de tenir compte à la fois des habitudes de l'utilisateur et des changements de comportement de l'utilisateur qui se dessinent dans le temps, de manière à permettre à l'utilisateur d'évoluer vis-à-vis de son entourage en respectant sa propre personnalité de façon à ne pas choquer son entourage par des changements trop rapides ou déplacés. L'historique peut également répertorier les différents types d'événement et les classifier en fonction des autres personnes participant à l'événement, de manière à éviter un comportement trop identique, comme la même tenue lors d'une autre réception avec les mêmes personnes, ou trop différent, comme une tenue complètement décalée par rapport à la précédente d'une réception sur l'autre avec les mêmes personnes.

De préférence, les données objectives comprennent au moins une ou plusieurs ou toutes les caractéristiques suivantes : age, taille, poids, métier, photo. De manière plus générale, les données objectives vont permettre au serveur d'examiner dans quelle mesure les goûts de l'utilisateur peuvent être satisfaits sans qu'il en résulte d'inconvénient majeur pour l'utilisateur : par exemple déconseiller à l'utilisateur une tenue qui, compte tenu des données objectives le concernant et du type d'événement auquel il va assister, le rendrait complètement ridicule vis-à-vis des autres personnes participant à l'événement.

De préférence, l'étape d'envoi du terminal mobile vers le serveur est réalisée par l'intermédiaire d'un MMS (MMS signifiant en langue anglo-saxonne Multimedia Message Service).

L'étape d'envoi du serveur vers le terminal mobile est réalisée par exemple par l'intermédiaire d'un SMS (SMS signifiant en langue anglo-saxonne Short Message Service). Cependant, l'étape d'envoi du serveur vers le terminal mobile est de préférence réalisée par l'intermédiaire d'un message vocal de manière à ce que l'utilisateur ait plus l'impression de recevoir un conseil personnalisé que de recevoir une information diffusée.

La figure 1 représente schématiquement un exemple de système incluant un serveur et un terminal mobile et mettant en oeuvre le procédé de communication selon l'invention. Le système comprend un terminal mobile 1 qui est de préférence un téléphone mobile, un réseau 2 qui peut notamment être de type Internet, un serveur 3. La connexion 4 reliant le terminal mobile 1 au réseau 2 est de préférence une connexion de type GPRS (GPRS signifiant en langue anglo-saxonne « General Packet Radio Service»). La connexion 5 reliant le réseau 2 au serveur 3 est de préférence une connexion de type ADSL (ADSL signifiant en langue anglo-saxonne « Asymetric Data Subscriber Line »).

Le serveur 3 comprend un module de réception 31 des informations fournies par l'utilisateur du terminal mobile 1, le module 31 de réception étant relié au réseau 2, une base de données 32 stockant les historiques des différents utilisateurs, un dispositif d'analyse 33 permettant d'établir le conseil ou les conseils à l'utilisateur, une interface 34 vers le réseau 2 permettant de dialoguer en échangeant des messages contenant des questions et des réponses entre le serveur 3 et le terminal mobile 1 de manière à pouvoir affiner le contenu du ou des conseils fournis par le serveur 3 à l'utilisateur du terminal mobile 1. Les flèches monodirectionnelles indiquent un transfert d'informations tandis que les flèches bidirectionnelles indiquent qu'il peut y avoir un échange d'informations plutôt qu'un simple transfert d'informations.

Un exemple de fonctionnement du système précédemment présenté va maintenant être décrit. Les informations fournies par l'utilisateur du terminal mobile 1 comprennent notamment le type d'événement auquel va assister l'utilisateur, l'information relative aux données objectives concernant l'utilisateur, le modèle de l'aspect d'une personne auquel l'utilisateur voudrait rendre son aspect semblable. Ces informations sont envoyées par le terminal mobile 1 au réseau 2 par l'intermédiaire de la connexion 4 ; le réseau 2 les fait ensuite parvenir au serveur 3 par l'intermédiaire de la connexion 5. Le module de réception 31 reçoit lesdites informations et les envoie au dispositif d'analyse 33 qui les évalue en consultant l'historique de l'utilisateur contenu dans la base de données 32. A partir de cette évaluation, le dispositif d'analyse 33 peut soit directement établir un ou plusieurs conseils qu'il envoie par l'intermédiaire de l'interface 34 sur le réseau 2 qui les fera parvenir au terminal mobile 1, soit échanger préalablement avec le terminal mobile 1 un ou plusieurs groupes de question et réponse par l'intermédiaire de l'interface 34 et du réseau 2. Dans un mode de réalisation, le module de réception 31 et l'interface 34 peuvent être rassemblés en un seul dispositif chargé de faire le lien entre le serveur 3 et le réseau 2 par l'intermédiaire de la connexion 5. Au dispositif d'analyse 33 peut être ajouté ou même substitué un expert humain pour réaliser l'étape d'évaluation et/ou l'étape d'établissement des conseils à l'utilisateur.

## Revendications

1. Procédé de communication entre un serveur (3) et un terminal mobile (1), comprenant :
- une étape d'envoi du terminal mobile vers le serveur d'au moins une image représentant un modèle d'un aspect d'une personne ;
- une étape d'analyse, par le serveur, de l'image envoyée ;
- une étape d'association, à l'image analysée, d'au moins une information relative à un conseil à l'utilisateur du terminal mobile ;
- une étape d'envoi, vers le terminal mobile, de l'information associée à l'image ou d'au moins une partie des informations associées à l'image ;
**caractérisé en ce que** :
- le terminal mobile fournit au serveur au moins deux informations supplémentaires destinées à aider le serveur à analyser l'image, parmi lesquelles le type d'événement auquel va assister l'utilisateur du terminal mobile et une information relative à des données objectives concernant l'utilisateur du terminal mobile ;
- le serveur utilise lesdites informations supplémentaires pour réaliser l'étape d'association ;
- l'information relative à un conseil à l'utilisateur du terminal mobile comprend un ou plusieurs conseils à l'utilisateur du terminal mobile pour rendre son aspect semblable au modèle.

2. Procédé selon la revendication 1, **caractérisé en ce qu'**un historique des consultations précédentes du serveur par l'utilisateur est stocké, **en ce qu'**une synthèse de cet historique est réalisée par le serveur, et **en ce que** le serveur utilise cette synthèse pour réaliser l'étape d'association.

3. Procédé selon la revendication 2, **caractérisé en ce que** la synthèse comprend le type d'événement auquel l'utilisateur assiste le plus fréquemment, le type de modèle le plus fréquemment choisi par l'utilisateur, et la version de l'information relative à des données objectives concernant l'utilisateur du terminal mobile la plus récemment reçue par le serveur.

4. Procédé selon l'une quelconque des revendications précédentes, **caractérisé en ce que** les données objectives comprennent au moins une ou plusieurs ou toutes les caractéristiques suivantes : age, taille, poids, métier, photo.

5. Procédé selon l'une quelconque des revendications 1 à 4, **caractérisé en ce que** le modèle d'un aspect d'une personne est un modèle de coiffure.

6. Procédé selon l'une quelconque des revendications 1 à 4, **caractérisé en ce que** le modèle d'un aspect d'une personne est un modèle d'habillage.

7. Procédé selon l'une quelconque des revendications 1 à 4, **caractérisé en ce que** le modèle d'un aspect d'une personne est un modèle de maquillage.

8. Procédé selon l'une quelconque des revendications précédentes, **caractérisé en ce que** l'étape d'envoi du terminal mobile vers le serveur est réalisée par l'intermédiaire d'un MMS.

9. Procédé selon l'une quelconque des revendications précédentes, **caractérisé en ce que** l'étape d'envoi du serveur vers le terminal mobile est réalisée par l'intermédiaire d'un SMS.

10. Procédé selon l'une quelconque des revendications 1 à 8, **caractérisé en ce que** l'étape d'envoi du serveur vers le terminal mobile est réalisée par l'intermédiaire d'un message vocal.

11. Terminal mobile comprenant :
- un dispositif d'envoi vers un serveur d'au moins une image représentant un modèle d'un aspect d'une personne ;
- un dispositif de réception, d'une information associée par un serveur à l'image et relative à un conseil à l'utilisateur du terminal mobile ou d'au moins une partie des informations associées par un serveur à l'image et relatives à un conseil à l'utilisateur du terminal mobile, et envoyée par un serveur ;
**caractérisé en ce que** le dispositif d'envoi est adapté pour fournir à un serveur au moins deux informations supplémentaires destinées à aider un serveur à analyser l'image, parmi lesquelles le type d'événement auquel va assister l'utilisateur du terminal mobile et une information relative à des données objectives concernant l'utilisateur du terminal mobile.

12. Serveur comprenant :
- un dispositif de réception d'au moins une image représentant un modèle d'un aspect d'une personne et étant envoyée par un terminal mobile ;
- un dispositif d'analyse de l'image reçue et d'association, à l'image analysée, d'au moins une information relative à un conseil à un utilisateur d'un terminal mobile ;
- un dispositif d'envoi, vers un terminal mobile, de l'information associée à l'image ou d'au moins une partie des informations associées à l'image ;
**caractérisé en ce que** :
- le dispositif de réception est adapté pour recevoir d'un terminal mobile au moins deux informations supplémentaires destinées à aider le serveur à analyser l'image, parmi lesquelles un type d'événement auquel un utilisateur d'un terminal mobile est susceptible d'assister et une information relative à des données objectives concernant un utilisateur d'un terminal mobile ;
- le dispositif d'analyse et d'association est adapté pour utiliser lesdites informations supplémentaires lors de l'étape d'association ;
- l'information destinée à être envoyée par le dispositif d'envoi du serveur à un terminal mobile, comprend un ou plusieurs conseils à un utilisateur d'un terminal mobile pour rendre son aspect semblable au modèle.
